(19) Europäisches Patentamt
European Patent Office
Office européen des brevets

(11) EP 0 594 021 B1

(12) EUROPÄISCHE PATENTSCHRIFT

(45) Veröffentlichungstag und Bekanntmachung des Hinweises auf die Patenterteilung:
**14.01.1998 Patentblatt 1998/03**

(51) Int Cl.[6]: **C08L 69/00**, C08K 5/51, C08K 5/521
// (C08L69/00, 67:02, 51:04, 27:18)

(21) Anmeldenummer: **93116415.6**

(22) Anmeldetag: **11.10.1993**

(54) **Flammwidrige Formmassen**

Flame-retardant moulding compositions

Compositions à mouler ignifuges

(84) Benannte Vertragsstaaten:
**DE ES FR GB IT NL**

(30) Priorität: **22.10.1992 DE 4235642**

(43) Veröffentlichungstag der Anmeldung:
**27.04.1994 Patentblatt 1994/17**

(73) Patentinhaber: **BAYER AG**
**51368 Leverkusen (DE)**

(72) Erfinder:
- **Eckel, Thomas, Dr.**
  **D-41539 Dormagen (DE)**
- **Wittmann, Dieter, Dr.**
  **D-51061 Köln (DE)**
- **Beicher, Horst, Dipl.-Ing.**
  **D-47918 Tönisvorst (DE)**

(56) Entgegenhaltungen:
**EP-A- 0 186 011**
**EP-A- 0 305 816**
**WO-A-86/04078**
**WO-A-90/03417**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 594 021 B1

## Beschreibung

Die vorliegende Erfindung betrifft flammwidrige Polycarbonat-ABS-Formmassen, die durch einen Zusatz von Polyalkylenterephthalat und einem oligomeren Phosphat im mechanischen Eigenschaftsniveau sowie in der thermischen Stabilität wesentlich verbessert sind.

EP-A 0 174 493 (US-A-4 983 658) beschreibt flammgeschützte, halogenhaltige Polymermischungen aus aromatischem Polycarbonat, styrolhaltigem Pfropfcopolymer, Monophosphaten und einer speziellen Polytetrafluorethylen-Formulierung. Im Brandverhalten und mechanischen Werte-Niveau sind diese Mischungen zwar ausreichend, allerdings können bei hohen Verarbeitungstemperaturen auf den Formkörpern Beeinträchtigungen der Oberflächenqualität auftreten. Außerdem können Defizite bei der Spannungsrißbeständigkeit auftreten.

In US-A-5 030 675 (EP-A-0 305 816) werden flammwidrige, thermoplastische Formmassen aus aromatischem Polycarbonat, ABS-Polymerisat, Polyalkylenterephthalat sowie Monophosphaten und fluorierten Polyolefinen als Flammschutzadditive beschrieben. Der guten Spannungsrißbeständigkeit stehen als Nachteile Defizite bei der Kerbschlagzähigkeit sowie ungenügende Thermostabilität bei hoher thermischer Belastung wie z.B. dem Verarbeitungsprozess gegenüber.

Diphosphate sind als Flammschutzadditve bekannt. In JP-A-59 202 240 wird die Herstellung eines solchen Produktes aus Phosphoroxichlorid, Diphenolen wie Hydrochinon oder Bisphenol A und Monophenolen wie Phenol oder Kresol beschrieben. Diese Diphosphate konnen in Polyamid oder Polycarbonat als Flammschutzmittel eingesetzt werden. In dieser Literaturstelle findet sich jedoch kein Hinweis auf eine verbesserte Thermostabilität und Kerbschlagzähigkeit durch Zusatz des oligomeren Phosphats in Verbindung mit Polyalkylenterephthalaten zu Polycarbonat-Formmassen.

In EP-A 0 363 608 werden Polymermischungen aus aromatischem Polycarbonat, styrolhaltigem Copolymer oder Pfropfcopolymer sowie oligomeren Phosphaten als Flammschutzadditive beschrieben. Zur Herstellung dünnwandiger Gehäuseteile ist das Niveau der Spannungsrißbeständigkeit dieser Mischungen oft nicht ausreichend.

Gemaß JP-A-59 193 920 werden flammwidrige Polyester wie Polyalkylenterephthalate durch Polykondensation von Ethylenglykol, Terephthalsäure und Hydrochinondiphosphat in Gegenwart von Antimonoxid, Kobaltacetat und anorganischen Phosphaten erhalten. Die dort beschriebenen Mischungen weisen jedoch ein mechanisches Eigenschaftsniveau auf, das für viele Anwendungen in der Datentechnik nicht ausreicht. Die Anwendung von Schwermetallen macht darüberhinaus eine Wiederverwertung solcher Formmassen problematisch.

Überraschenderweise wurde nun gefunden, daß sich flammwidrige Polycarbonat-ABS-Formmassen mit ausgezeichneter Kerbschlagzähigkeit und Spannungsrißbeständigkeit sowie einer sehr guten thermischen Beständigkeit unter Verarbeitungsbedingungen herstellen lassen, wenn eine Additiv-Kombination aus einem Polyalkylenterephthalat und einem oligomeren Phosphat zugesetzt wird. Diese Formmassen eignen sich insbesondere zur Herstellung dünnwandiger Formteile (Datentechnik-Gehäuseteile), wo hohe Verarbeitungstemperaturen und -Drücke zu einer erheblichen Belastung des eingesetzten Materials führen.

Gegenstand der Erfindung sind flammwidrige, thermoplastische Formmassen enthaltend

A) 40 bis 98 Gew.-Teilen, vorzugsweise 50 bis 95 Gew.-Teilen, besonders bevorzugt 60 bis 90 Gew.-teilen eines aromatischen Polycarbonats,

B) 0,5 bis 40 Gew.-Teilen, vorzugsweise 1 bis 30 Gew.-Teilen, besonders bevorzugt 2 bis 10 Gew.-Teilen eines Polyalkylenterephthalats,

C) 0,5 bis 40 Gew.-Teilen, vorzugsweise 1 bis 20 Gew.-Teilen, besonders bevorzugt 2 bis 12 Gew.-Teilen eines Pfropfpolymerisats,

D) 0,5 bis 20 Gew.-Teilen, bevorzugt 1 bis 18 Gew.-Teilen, besonders bevorzugt 2 bis 15 Gew.-Teilen einer Phosphorverbindung der Formel (I)

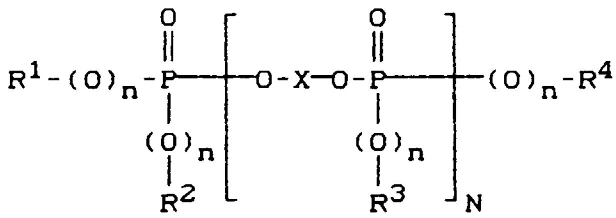

(I)

worin

| | |
|---|---|
| $R^1$, $R^2$, $R^3$, $R^4$ | unabhängig voneinander $C_1$-$C_8$-Alkyl, $C_5$-$C_6$-Cycloalkyl, $C_6$-$C_{10}$-Aryl oder $C_7$-$C_{12}$-Aralkyl, |
| n | unabhängig voneinander 0 oder 1, |
| N | 0,5 bis 5 und |
| X | einen ein- oder mehrkernigen aromatischen Rest mit 6 bis 30 C-Atomen bedeuten, |

und

E) 0,05 bis 5 Gew.-Teilen, vorzugsweise 0,1 bis 1 Gew.-Teil, besonders bevorzugt 0,1 bis 0,5 Gew.-Teilen eines fluorierten Polyolefins mit einem mittleren Teilchendurchmeser von 0,05 bis 1000 µm, einer Dichte von 1,2 bis 2,3 g/cm$^3$ und einem Fluorgehalt von 65 bis 76 Gew.-%.

Komponente A

Erfindungsgemäß geeignete, thermoplastische, aromatische Polycarbonate gemäß Komponente A sind solche auf Basis der Diphenole der Formel (II)

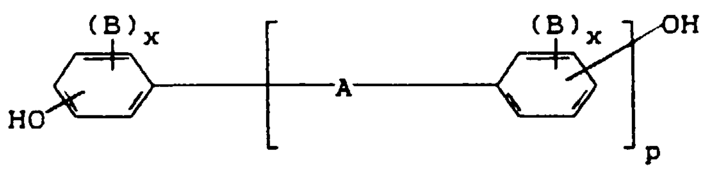

(II)

worin

A eine Einfachbindung, $C_1$-$C_5$-Alkylen, $C_2$-$C_5$-Alky-liden, $C_5$-$C_6$-Cycloalkyliden, -S- oder -$SO_2$-,

B Chlor, Brom

x 0, 1 oder 2 und

p 1 oder 0 sind

oder alkylsubstituierte Dihydroxyphenylcycloalkane der Formel (III),

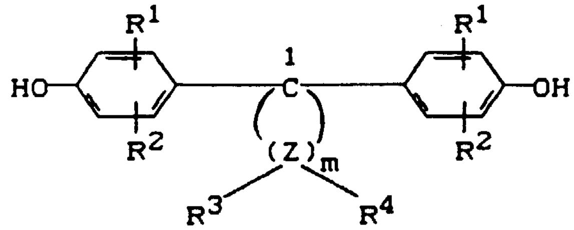 (III)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes Z individuell wählbar, unabhängig voneinander Wasserstoff oder $C_1$-$C_6$-Alkyl

und

Z Kohlenstoff bedeuten, mit der Maßgabe, daß an mindestens einem Atom Z $R^3$ und $R^4$ gleichzeitig Alkyl bedeuten.

Geeignete Diphenole der Formel (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (IID sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarbonate.

A kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A-2 842 005 oder Monoalkylphenol bzw. Dialkylphenol mit insgesamt 8 bis 20 C-Atomen in den Alkylsubstituenten gemaß DE-A-3 506 472.2 wie 3,5-di-tert.-Butylphenol, p-iso-Octylphenol), p-tert.-Octylphenol, p-Dodecylphenol und 2-(3,5-Dimethylheptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole der Formeln (I) und/oder (II).

Die erfindungsgemäß geeigneten Polycarbonate A haben mittlere Molekulargewichte ($\overline{M}w$, Gewichtsmittel, gemessen z.B. durch Ultrazentrifugation oder Streulichtmessung) von 10 000 bis 200 000, vorzugsweise 20 000 bis 80 000.

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan und die Copolycarbonate von Bisphenol A mit bis zu 60 Mol-%, bezogen auf die Mol-Summen an Diphenolen, 1,1-Bis-(4-hydroxyphenyl)-3,3,5-trimethylcyclohexan.

Die Polycarbonate A können teilweise oder vollständig durch aromatische Polyestercarbonate ersetzt werden.

Komponente B

Polyalkylenterephthalate B) im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte. Sie lassen sich nach bekannten Methoden herstellen (Kunststoff-Handbuch, Bd. VIII, S. 695 ff, Carl Hanser-Verlag, München, 1973).

Bevorzugte Polyalkylenterephthalate B) konnen neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- und/oder Cyclohexadiessigsäure.

Die bevorzugten Polyalkylenterephthalate B) können neben Ethylenglykol- bzw. Butandiol-1,4-resten bis zu 20 Mol%, vorzugsweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-di-methanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-Bis-(3-β-hydroxyethoxyphenyl)-propan und/oder 2,2-Bis-(4-hydroxypropoxyphenyl)-propan (DE-A-24 07 647, DE-A-24 07 776, DE-A-27 15 932).

Die Polyalkylenterephthalate B) können durch Einbau relativ kleiner Mengen 3- oder 4-wertiger Alkohole oder 3- oder 4-basischer Carbonsäure, wie sie z.B. in der DE-A-19 00 270 und der US-A-3 692 744 beschrieben sind, verzweigt werden. Beispiele bevorzugter Verzweigungsmittel sind Trimesinsäure, Trimellithsäure, Trimethylolethan und -propan und/oder Pentaerythrit.

Besonders bevorzugt sind Polyalkylenterephthalate B), die allein aus Terephthalsäure oder deren reaktionsfähigen Derivaten (.B. deren Dialkylestern) und Ethylenglykol und/oder Butandiol-1,4 (Polyethylen- und Polybutylenterephthalat) hergestellt worden sind, und Mischungen dieser Polyalkylenterephthalate.

Die als Komponente B) vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gewichtsteile) bei 25°C.

Komponente C

Die Pfropfpolymerisate C) umfassen z.B. Pfropfcopolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393 - 406 und in C.B. Bucknall, "Toughened Plastics", Appl. Science Publishers, London 1977, beschrieben sind. Bevorzugte Polymerisate C) sind partiell vernetzt und besitzen Gelgehalte von über 20 Gew.-%, vorzugsweise über 40 Gew.-%, insbesondere über 60 Gew.-%.

Bevorzugte Pfropfpolymerisate C) umfassen Pfropfpolymerisate aus:

C.1) 5 bis 95, vorzugsweise 30 bis 80, Gew.-Teile, einer Mischung aus

C.1.1) 50 bis 95 Gew.-Teilen Styrol, α-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methacrylat, oder Mischungen dieser Verbindungen und

C.1.2) 5 bis 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methacrylat, Maleinsäureanhydrid, $C_1$-$C_4$-alkyl- bzw. phenyl-N-substituierte Maleinimide oder Mischungen dieser Verbindungen auf

C.2) 5 bis 95, vorzugsweise 20 bis 70, Gew.-Teilen Polymerisat mit einer Glasübergangstemperatur unter -10°C.

Bevorzugte Pfropfpolymerisate C) sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-A-1 694 173 (= US-A-3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/ Acrylnitril-Cpolymerisate, Polyisobutene oder Polyisoprene, wie sie z.B. in der DE-A-2 348 377 (= US-A-3 919 353) beschrieben sind.

Besonders bevorzugte Polymerisate C) sind z.B. ABS-Polymerisate, wie sie z.B. in der DE-A-2 035 390 (= US-A-3 644 574) oder in der DE-A-2 248 242 (= GB-A-1 409 275) beschrieben sind.

Besonders bevorzugte Pfropfpolymerisate C) sind Pfropfpolymerisate, die durch Pfropfreaktion von

I. 10 bis 70, vorzugsweise 15 bis 50, insbesondere 20 bis 40, Gew.-X, bezogen auf Pfropfprodukt, mindestens eines (Meth-)Acrylsäureesters oder 10 bis 70, vorzugsweise 15 bis 50, insbesondere 20 bis 40 Gew.-X eines Gemisches aus 10 bis 50, vorzugsweise 20 bis 35, Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage

erhältlich sind,
wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropfpolymerisats C) 0,05 bis 2, vorzugsweise 0,1 bis 0,6 µm, betragen.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/ oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C) auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-X der Teilchen liegen. Er kann mittels Ultrazentrifugenmessungen (W. Scholtan, H. Lange, Kolloid, Z. und Z. Polymere 250 (1972), 782-796) bestimmt werden.

Besonders bevorzugte Pfropfpolymerisate C) sind z.B. auch Pfropfpolymerisate aus

(a) 20 bis 90 Gew.-%, bezogen auf C), Acrylatkautschuk mit einer Glasübergangstemperatur unter -20°C als Pfropfgrundlage und
(b) 10 bis 80 Gew.-X, bezogen auf C), mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Acrylatkautschuke (a) der Polymerisate C) sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di-und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-X der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage (a)

sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den DE-A-37 04 657, DE-A-37 04 655, DE-A-36 31 540 und DE-A-36 31 539 beschrieben werden.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme-Verlag, Stuttgart 1977).

Die für die bevorzugte Ausführungsform der gemeinsamen Fällung mit dem Tetrafluorethylenpolymerisat E) zu verwendenden wäßrigen Dispersionen von Pfropfpolymerisat C) besitzen im allgemeinen Feststoffgehalte von 25 bis 60, vorzugsweise von 30 bis 45 Gew.-%.

Komponente D

Die erfindungsgemäßen Polymermischungen enthalten als Flammschutzmittel ein Phosphat der Formel (I):

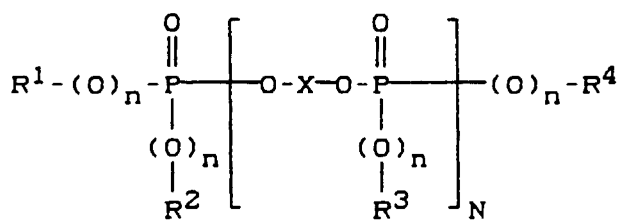 (I)

In der Formel bedeuten $R^1$, $R^2$, $R^3$, $R^4$ unabhängig voneinander $C_1$-$C_8$-Alkyl, $C_5$-$C_6$-Cycloalkyl, $C_6$-$C_{10}$-Aryl oder $C_7$-$C_{12}$-Aralkyl, bevorzugt sind $C_6$-$C_{10}$-Aryl oder $C_7$-$C_{12}$-Aralkyl. Die aromatischen Gruppen $R^1$, $R^2$, $R^3$ und $R^4$ können ihrerseits mit Halogen- oder Alkylgruppen substituiert sein. Besonders bevorzugte Aryl-Reste sind Kresyl, Phenyl, Xylenyl, Propylphenyl oder Butylphenyl sowie auch die bromierten und chlorierten Derivate davon.

X in der Formel (I) bedeutet einen ein- oder mehrkernigen aromatischen Rest mit 6 bis 30 C-Atomen. Dieser leitet sich von Diphenolen ab wie z.B. Bisphenol A, Resorcin oder Hydrochinon oder auch die chlorierten oder bromierten Derivate davon.

n in der Formel (I) kann unabhängig voneinander 0 oder 1 sein, vorzugsweise ist n gleich 1.

N kann Werte zwischen 0,5 und 5, vorzugsweise zwischen 1 und 2 einnehmen. Als erfindungsgemäße Komponente D können auch Mischungen verschiedener oligomerer Phosphate eingesetzt werden. In diesem Fall hat N einen Durchschnittswert zwischen 0,5 und 5.

Komponente E

Die fluorierten Polyolefine E) sind hochmolekular und besitzen Glasübergangstemperaturen von über -30°C, in der Regel von über 100°C, Fluorgehalte, vorzugsweise von 65 bis 76, insbesondere von 70 bis 76, Gew.-%, mittlere Teilchendurchmesser $d_{50}$ von 0,05 bis 1000, vorzugsweise 0,08 bis 20 µm. Im allgemeinen haben die fluorierten Polyolefine E) eine Dichte von 1,2 bis 2,3 g/cm$^3$. Bevorzugte fluorierte Polyolefine E) sind Polytetrafluorethylen, Polyvinylidenfluorid, Tetrafluorethylen/Hexafluorpropylen- und Ethylen!Tetrafluorethylen-Copolymerisate. Die fluorierten Polyolefine sind bekannt (vgl. "Vinyl und Related Polymers" von Schildknecht, John Wiley & Sons, Inc., New York, 1962, Seite 484 - 494; "Fluorpolymers" von Wall, Wiley-Interscience, John Wiley & Sons, Inc., New York, Band 13, 1970, Seite 623-654; "Modern Plastics Encyclopedia", 1970 - 1971, Band 47, Nr. 10 A, Oktober 1970, Mc Graw-Hill, Inc., New York, Seite 134 und 774; "Modern Plastics Encyclopedia", 1975 - 1976, Oktober 1975, Band 52, Nr. 10 A, Mc Graw-Hill, Inc., New York, Seite 27, 28 und 472 und US-A-3 671 487, US-A-3 723 373 und US-A-3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z.B. US-A-2 393 967). Je nach Einsatzform kann die Dichte dieser Materialien zwischen 1,2 und 2,3 g/cm$^3$, die mittlere Teilchengröße zwischen 0,05 und 1000 µm liegen.

Erfindungsgemäß bevorzugten fluorierten Polyolefine E) sind Tetrafluorethylenpolymerisate und haben mittlere Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E) mit Emulsionen der Pfropfpolymerisate C) eingesetzt.

Geeignete, in Pulverform einsetzbare fluorierte Polyolefine E) sind Tetrafluorethylenpolymerisate mit mittleren Teilchendurchmesser von 100 bis 1000 µm und Dichten von 2,0 g/cm$^3$ bis 2,3 g/cm$^3$.

Zur Herstellung einer koagulierten Mischung aus C) und E) wird zuerst eine wäßrige Emulsion (Latex) eines Pfropfpolymerisates C) mit mittleren Latexteilchendurchmesser von 0,05 bis 2 µm, insbesondere 0,1 bis 0,6 µm, mit einer feinteiligen Emulsion eines Tetrafluorethylenpolymerisates E) in Wasser mit mittleren Teilchendurchmesser von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate C) besitzen Feststoffgehalte von 25 bis 50 Gew.-X, vorzugsweise von 30 bis 45 Gew.-%.

Die Mengenangabe bei der Beschreibung der Komponente C schließt den Anteil des Pfropfpolymerisats für die koagulierte Mischung aus Pfropfpolymerisat und fluoriertem Polyolefinen.

In der Emulsionsmischung liegt das Gewichtsverhältnis Pfropfpolymerisat C) zum Tetrafluorethylenpolymerisat E) bei 95:5 bis 60:40. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen -Emulsionen sind handelsübliche Produkte und werden beispielsweise von der Firma DuPont als Teflon® 30 N angeboten.

Die erfindungsgemäßen Formmassen konnen übliche Additive, wie Gleit- und Entformungsmittel, Nukleiermittel, Antistatika, Stabilisatoren, Füll- und Verstärkungsstoffe sowie Farbstoffe und Pigmente enthalten.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen, bestehend aus den Komponenten A bis E und gegebenenfalls weiteren bekannten Zusätzen wie Stabilisatoren, Farbstoffen, Pigmenten, Gleit- und Entformungsmitteln, Füll- und Verstärkungsstoffen, Nukleiermittel sowie Antistatika, werden hergestellt, indem man die jeweiligen Bestandteile in bekannter Weise vermischt und bei Temperaturen von 200° C bis 330° C in üblichen Aggregaten wie Innenknetern, Extrudern und Doppelwellenschnecken schmelzcompoundiert oder schmelzextrudiert, wobei die Komponente E) vorzugsweise in Form der bereits erwähnten koagulierten Mischung eingesetzt wird.

Gegenstand der vorliegenden Erfindung ist somit auch ein Verfahren zur Herstellung von thermoplastischen Formmassen, bestehend aus den Komponenten A bis E sowie gegebenenfalls Stabilisatoren, Farbstoffen, Pigmenten, Gleit- und Entformungsmitteln, Füll- und Verstärkungsstoffen, Nukleiermitteln sowie Antistatika, das dadurch gekennzeichnet ist, daß man die Komponenten A bis E sowie gegebenenfalls Stabilisatoren, Farbstoffe, Pigmente, Fließmittel, Füll- und Verstärkungsstoffe, Gleit- und Entformungsmittel, Nukleiermittel und/oder Antistatika nach erfolgter Vermischung bei Temperaturen von 200 bis 330° C in gebräuchlichen Aggregaten schmelzcompoundiert oder schmelzextrudiert, wobei die Komponente E vorzugsweise in Form einer koagulierten Mischung mit der Komponente C eingesetzt wird.

Die Vermischung der einzelnen Bestandteile kann in bekannter Weise sowohl sukzessive als auch simultan erfolgen, und zwar sowohl bei etwa 20° C (Raumtemperatur) als auch bei höherer Temperatur.

Die Formmassen der vorliegenden Erfindung konnen zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit und Spannungsrißbeständigkeit der eingesetzten Kunststoffe gestellt werden.

Eine weitere Form der Verarbeitung ist die Herstellung von Formkörpern durch Tiefziehen aus vorher hergestellten Platten oder Folien.

## Beispiele

### Komponente A

Polycarbonat auf Basis Bisphenol A mit einer relativen Lösungsviskosität von 1,26 bis 1,28 gemessen in Methylenchlorid bei 25° C und einer Konzentration von 0,5 g/100 ml.

Komponente B

Lineares Polyethylenterephthalat mit einer Intrinsic-Viskosität I.V. = 0,85 dl/g, gemessen in Phenol/o-Dichlorbenzol (1:1) bei 25° C, und einer Konzentration von 0,5 g/dl (Melinar B 90 S der Firma ICI).

Komponente C

Pfropfpolymerisat von 45 Gew.-Teilen Styrol und Acrylnitril im Verhältnis 72:28 auf 55 Gew.-Teile teilchenförmigen vernetzten Polybutadienkautschuk (mittlerer Teilchendurchmesser $d_{50}$ = 0,4 µm), hergestellt durch Emulsionspolymerisation.

Komponente D

m-Phenylen-bis(di-phenyl-phosphat) (Fyroflex RDP der Firma Akzo)

Komponente E

Tetrafluorethylenpolymerisat als koagulierte Mischung aus einer SAN-Pfropfpolymerisat-Emulsion gemäß C) in Wasser und einer Tetrafluorethylenpolymerisat-Emulsion in Wasser. Das Gewichtsverhältnis Pfropfpolymerisat C) zum Tetrafluorethylenpolymerisat E in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,4 µm.

Herstellung von E

Die Emulsion des Tetrafluorethylenpolymerisats (Teflon 30 N der Fa. DuPont) wird mit der Emulsion des SAN-Pfropfpolymerisats C) vermischt und mit 1,8 Gew.-%, bezogen auf Polymerfeststoff, phenolischer Antioxidantien stabilisiert. Bei 85 bis 95° C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100° C zu einem Pulver getrocknet. Dieses Pulver kann dann mit den weiteren Komponenten in den beschriebenen Aggregaten compoundiert werden.

Herstellung und Prüfung der erfindungsgemäßen Formmassen

Das Mischen der Komponenten A bis E erfolgte auf einem 3-1-Innenkneter. Die Formkörper wurden auf einer Spritzgießmaschine Typ Arburg 270 E bei 260° C hergestellt. Die Bestimmung der Kerbschlagzähigkeit erfolgte nach Methode ISO 180 IA an Stäben der Abmessung 80x10x4 $mm^3$ bei Raumtemperatur.

Die Bestimmung der Wärmeformbeständigkeit nach Vicat B erfolgte gemäß DIN 53 460.

Das Spannungsrißverhalten wurde an Stäben der Abmessung 80x10x4 $mm^3$, Massetemperatur 260°C untersucht. Als Testmedium wurde eine Mischung aus 60 Vol.-% Toluol und 40 Vol.-X Isopropanol verwendet. Die Probekörper wurden mittels einer Kreisbogenschablone vorgedehnt und 5 min bei Zimmertemperatur im Testmedium simultan gelagert. Die Vordehnung $\varepsilon_x$ betrug 0,2 - 2,4 %. Das Spannungsrißverhalten wurde über die Rißbildung bzw. den Bruch in Abhängigkeit der Vordehnung beurteilt.

Die Zusammensetzung der geprüften Materialien sowie die erhaltenen Daten sind in der folgenden Tabelle zusammengefaßt.

Aus der Tabelle geht hervor, daß die Formmassen eine Eigenschaftskombination aus hoher Kerbschlagzähigkeit und sehr guter Spannungsrißbeständigkeit zeigen. Selbst nach einer Lagerung von 5 Minuten im Testmedium trat noch kein Bruch der Prüfkörper auf. Ergänzt wird diese günstige Eigenschaftskombination durch eine hohe Wärmeformbeständigkeit und eine störungsfreie Oberflächenbeschaffenheit.

Tabelle

Zusammensetzung und Eigenschaften der Formmassen

| Beispiel | Komponenten A [Gew.-Teile] | B | C | D | E | $a_k$ [kJ/m²] | Vicat B 120 [°C] | Bruch bei $\epsilon_x$ [%] | Oberflächenqualität[1] |
|---|---|---|---|---|---|---|---|---|---|
| 1 | 76 | 5 | 5 | 12 | 4 | 60 | 97 | 2,4[2] | + |
| 2 | 77 | 5 | 5 | 11 | 4 | 60 | 100 | 2,4[2] | + |
| 3 | 76 | 5 | 5 | 10 | 4 | 56 | 103 | 2,4[2] | + |
| 4 | 77 | 5 | 5 | 9 | 4 | 57 | 105 | 2,4[2] | + |

1) + heller Rohton, keine Oberflächenstörungen
- Rohton dunkler, Oberflächenstörungen

2) nach 5 Minuten noch nicht gebrochen

## Patentansprüche

**1.** Flammwidrige, thermoplastische Formmassen enthaltend

A) 40 bis 98 Gew.-Teile eines aromatischen Polycarbonats oder Polyestercarbonats

B) 0,5 bis 40 Gew.-Teile eines Polyalkylenteraphthalats,

C) 0,5 bis 40 Gew.-Teile eines Pfropfpolymerisats,

D) 0,5 bis 20 Gew.-Teile einer Phosphorverbindung der Formel (I),

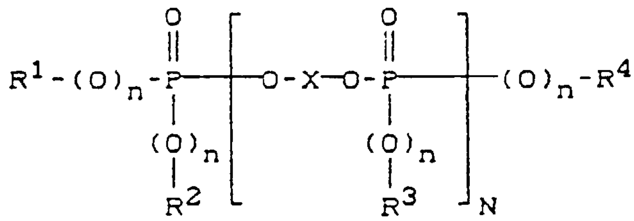

(I)

worin

| | |
|---|---|
| $R^1$, $R^2$, $R^3$, $R^4$ | unabhängig voneinander $C_1$-$C_8$-Alkyl, $C_5$-$C_6$-Cycloalkyl, $C_6$-$C_{10}$-Aryl oder $C_7$-$C_{12}$-Aralkyl, |
| n | unabhängig voneinander 0 oder 1, |
| N | 0,5 bis 5 und |
| X | einen ein- oder mehrkernigen aromatischen Rest mit 6 bis 30 C-Atomen bedeuten, |

und

E) 0,05 bis 5 Gew.-Teile eines fluorierten Polyolefins mit einem mittleren Teilchendurchmeser von 0,05 bis 1000 µm, einer Dichte von 1,2 bis 2,3 $g/cm^3$ und einem Fluorgehalt von 65 bis 76 Gew.-%.

**2.** Flammwidrige, thermoplastische Formmassen gemäß Anspruch 1, enthaltend 50 bis 95 Gew.-Teile eines aromatischen Polycarbonats A.

**3.** Flammwidrige, thermoplastische Formmassen gemäß Anspruch 1, enthaltend 1 bis 30 Gew.-Teile eines Polyalkylenterephthalats B.

**4.** Flammwidrige, thermoplastische Formmassen gemäß Anspruch 1, enthaltend Pfropfpolymerisate hergestellt durch Copolymerisation von

5 bis 95 Gew.-Teilen einer Mischung aus

50 bis 95 Gew.-Teilen Styrol, α-Methylstyrol, halogen- oder alkylkernsubstituiertem Styrol, $C_1$-$C_8$-Alkylmethacrylat, $C_1$-$C_8$-Alkylacrylat oder Mischungen dieser Verbindungen und

5 bis 50 Gew.-Teilen Acrylnitril, Methacrylnitril, $C_1$-$C_8$-Alkylmethacrylat, $C_1$-$C_8$-Alkylacrylat, Maleinsäureanhydrid, $C_1$-$C_4$-alkyl- bzw. phenyl-N-substituiertem Maleinimid oder Mischungen dieser Verbindungen auf

5 bis 95 Gew.-Teile Kautschuk mit einer Glasübergangstemperatur unter -10°C.

**5.** Flammwidrige, thermoplastische Formmassen gemäß Anspruch 4, enthaltend als Kautschuke Dienkautschuke, Acrylatkautschuke, Silikonkautschuke oder Ethylen-Propylen-Dien-Kautschuke.

**6.** Flammwidrige, thermoplastische Formmassen gemäß Anspruch 1, enthaltend 2 bis 15 Gew.-Teile an Phosphorverbindung D.

7. Flammwidrige, thermoplastische Formmassen gemäß Anspruch 1, enthaltend als Komponente D ein Phosphat oder eine Mischung Phosphate.

8. Flammwidrige, thermoplastische Formmassen gemäß Anspruch 1, enthaltend als Komponente D ein oligomeres Phosphat, bei dem $R^1$, $R^2$, $R^3$ und $R^4$ Phenylgruppen und X eine Phenylengruppe darstellt.

9. Flammwidrige thermoplastische Formmasse gemäß Anspruch 1 enthaltend Zusatzstoffe ausgewählt aus der Gruppe der Stabilisatoren, Farbstoffe, Pigmente, Gleit- und Entformungsmittel, Füll- und Verstärkungsmittel, Nukleiermittel und Antistatika.

10. Verwendung der Formmassen gemäß Anspruch 1 zur Herstellung von Formkörpern.

## Claims

1. Flame-retardant, thermoplastic moulding compositions containing

A) 40 to 98 parts by weight of an aromatic polycarbonate or polyestercarbonate

B) 0.5 to 40 parts by weight of a polyalkylene terephthalate,

C) 0.5 to 40 parts by weight of a graft polymer,

D) 0.5 to 20 parts by weight of a phosphorus compound of the formula (I),

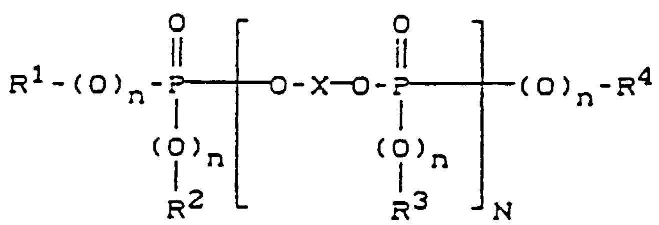

(I)

in which

| | |
|---|---|
| $R^1$, $R^2$, $R^3$, $R^4$ | mutually independently mean $C_1$-$C_8$ alkyl, $C_5$-$C_6$ cycloalkyl, $C_6$-$C_{10}$ aryl or $C_7$-$C_{12}$ aralkyl, |
| n | mutually independently mean 0 or 1, |
| N | means 0.5 to 5 and |
| X | means a mono- or polycyclic aromatic residue having 6 to 30 C atoms, and |
| E) | 0.05 to 5 parts by weight of a fluorinated polyolefin having an average particle diameter of 0.05 to 1000 µm, a density of 1.2 to 2.3 g/cm$^3$ and a fluorine content of 65 to 76 wt.%. |

2. Flame-retardant, thermoplastic moulding compositions according to claim 1 containing 50 to 95 parts by weight of an aromatic polycarbonate A.

3. Flame-retardant, thermoplastic moulding compositions according to claim 1 containing 1 to 30 parts by weight of a polyalkylene terephthalate B.

4. Flame-retardant, thermoplastic moulding compositions according to claim 1 containing graft polymers produced by copolymerising

5 to 95 parts by weight of a mixture of

50 to 95 parts by weight of styrene, α-methylstyrene, halo- or alkyl-ring-substituted styrene, $C_1$-$C_8$ alkyl methacrylate, $C_1$-$C_8$ alkyl acrylate or mixtures of these compounds and

5 to 50 parts by weight of acrylonitrile, methacrylonitrile, $C_1$-$C_8$ alkyl methacrylate, $C_1$-$C_8$ alkyl acrylate, maleic anhydride, $C_1$-$C_4$ alkyl- or phenyl-N-substituted maleimide or mixtures of these compounds onto

5 to 95 parts by weight of rubber having a glass transition temperature of below -10°C.

**5.** Flame-retardant, thermoplastic moulding compositions according to claim 4 containing diene rubbers, acrylate rubbers, silicone rubbers or ethylene/ propylene/diene rubbers as the rubbers.

**6.** Flame-retardant, thermoplastic moulding compositions according to claim 1 containing 2 to 15 parts by weight of phosphorus compound D.

**7.** Flame-retardant, thermoplastic moulding compositions according to claim 1 containing a phosphate or mixture of phosphates as component D.

**8.** Flame-retardant, thermoplastic moulding compositions according to claim 1 containing as component D an oligomeric phosphate, in which $R^1$, $R^2$, $R^3$ and $R^4$ represent phenyl groups and X a phenylene group.

**9.** Flame-retardant, thermoplastic moulding composition according to claim 1 containing additives selected from the group comprising stabilisers, dyes, pigments, lubricants and mould release agents, fillers and reinforcing materials, nucleating agents and antistatic agents.

**10.** Use of the moulding compositions according to claim 1 for the production of mouldings.

## Revendications

**1.** Matières à mouler ignifuges, thermoplastiques contenant

A) de 40 à 98 parties en poids d'un polycarbonate ou d'un polyestercarbonate aromatique,

B) de 0,5 à 40 parties en poids d'un poly(téréphtalate d'alkylène),

C) de 0,5 à 40 parties en poids d'un polymère greffé,

D) de 0,5 à 20 parties en poids d'un composé du phosphore de la formule (I),

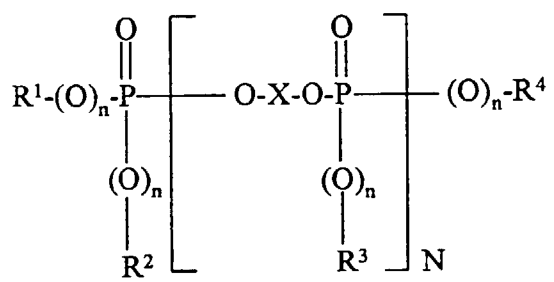

(I)

où

| | |
|---|---|
| $R^1$, $R^2$, $R^3$, $R^4$ | sont indépendamment un groupe alkyle en $C_1$-$C_8$, un groupe cycloalkyle en $C_5$-$C_6$, un groupe aryle en $C_6$-$C_{10}$ ou un groupe aralkyle en $C_7$-$C_{12}$, |
| n | est indépendamment égal à 0 ou à 1, |
| N | est compris entre 0,5 et 5 et |

X est un reste aromatique à un ou plusieurs cycles avec de 6 à 30 atomes de C,

et

E) de 0,05 à 5 parties en poids d'une polyoléfine fluorée avec un diamètre moyen de particules de 0,05 à 1 000 µm, une densité de 1,2 à 2,3 g/$cm^3$ et une teneur en fluor de 65 à 76 % en poids.

**2.** Matières à mouler ignifuges, thermoplastiques selon la revendication 1, contenant de 50 à 95 parties en poids d'un polycarbonate aromatique A.

**3.** Matières à mouler ignifuges, thermoplastiques selon la revendication 1, contenant de 1 à 30 parties en poids d'un poly(téréphtalate d'alkylène) B.

**4.** Matières à mouler ignifuges, thermoplastiques selon la revendication 1, contenant un polymère greffé préparé par copolymérisation

de 5 à 95 parties en poids d'un mélange constitué
de 50 à 95 parties en poids de styrène, d'α-méthylstyrène, de styrène substitué au noyau par un halogène ou un groupe alkyle, de méthacrylate d'alkyle en $C_1$-$C_8$, d'acrylate d'alkyle en $C_1$-$C_8$ ou de mélanges de ces composés et
de 5 à 50 parties en poids d'acrylonitrile, de méthacrylonitrile, de méthacrylate d'alkyle en $C_1$-$C_8$, d'acrylate d'alkyle en $C_1$-$C_8$, d'anhydride d'acide maléique, de maléimide N-substitué par un groupe alkyle en $C_1$-$C_4$ respectivement par un groupe phényle ou de mélanges de ces composés sur
de 5 à 95 parties en poids de caoutchouc avec une température de transition vitreuse inférieure à -10°C.

**5.** Matières à mouler ignifuges, thermoplastiques selon la revendication 4, contenant comme caoutchouc des caoutchoucs de diène, des caoutchoucs d'acrylate, des caoutchoucs de silicone ou des caoutchoucs d'éthylène-propylène-diène.

**6.** Matières à mouler ignifuges, thermoplastiques selon la revendication 1, contenant de 2 à 15 parties en poids de composé du phosphore D.

**7.** Matières à mouler ignifuges, thermoplastiques selon la revendication 1, contenant comme constituant D un phosphate ou un mélange de phosphates.

**8.** Matières à mouler ignifuges, thermoplastiques selon la revendication 1, contenant comme constituant D un phosphate oligomère pour lequel $R^1$, $R^2$, $R^3$ et $R^4$ représentent des groupes phényle et X un groupe phénylène.

**9.** Matières à mouler ignifuges, thermoplastiques selon la revendication 1, contenant des additifs choisis parmi des stabilisateurs, des colorants, des pigments, des agents de démoulage et d'extraction, des agents de charge et de renforcement, des agents de nucléation et des agents antistatiques.

**10.** Utilisation des matières à mouler selon la revendication 1 pour la préparation de corps moulés.